# EUROPÄISCHE PATENTSCHRIFT

(11) **EP 1 888 960 B1**
(45) Veröffentlichungstag und Bekanntmachung des Hinweises auf die Patenterteilung: **15.07.2009**
(21) Anmeldenummer: 06727670.9
(22) Anmeldetag: 15.03.2006
(51) Int. Cl.: F16L 37/091, F16L 21/06

(54) **VERANKERUNGSELEMENT FÜR ROHRKUPPLUNGEN**
ANCHORING ELEMENT FOR COUPLING TUBES
ELEMENT D'ANCRAGE DESTINE A DES COUPLAGES DE TUBES

(30) Priorität: 22.03.2005 CH 4852005
(43) Veröffentlichungstag der Anmeldung: 20.02.2008
(73) Patentinhaber: Straub Werke AG, 7323 Wangs (CH)
(72) Erfinder: SUDAR, Damir, CH-7310 Bad Ragaz (CH)
(74) Vertreter: Rosenich, Paul
(86) Internationale Anmeldenummer: PCT/IB2006/050807
(87) Internationale Veröffentlichungsnummer: WO 2006/100628

(56) Entgegenhaltungen:
- EP-A- 0 738 850
- DE-A1- 2 637 044
- DE-A1- 10 302 598
- FR-A- 2 822 521
- GB-A- 2 182 743
- US-A- 5 160 179

## Beschreibung

Die Erfindung betrifft Verankerungselemente für Rohrkupplungen zum kraftschlüssigen Verbinden glattendiger Rohre, mit einem Gehäuse, wenigstens einem darin angeordneten Dichtelement aus gummielastischem Werkstoff, wobei das Verankerungselement im Einsatz zum Eingriff mit wenigstens einem der zu verbindenden Rohre dient, im Querschnitt im wesentlichen L-förmig ausgebildet ist und einen sich in Achsrichtung erstreckenden ersten Schenkel sowie einen zweiten, sich unter einem spitzen Winkel zum ersten Schenkel erstreckenden Schenkel aufweist und der Übergang zwischen den beiden Schenkeln vorzugsweise als Radius ausgebildet ist, wobei der zweite Schenkel wenigstens teilweise mit in Längsrichtung verlaufenden Schlitzen versehen ist.

Verankerungselemente für Rohrkupplungen übernehmen die Übertragung der infolge von Innendruck bzw. von aussen auf eine Rohrleitung einwirkenden Kräften zwischen den einzelnen Rohren der Rohrleitung. Dabei handelt es sich in erster Linie um Zug- bzw. Druckkräfte. - Je nach Beanspruchung der Rohrverbindungen können jedoch auch Querkräfte oder Torsionsmomente auftreten.

Die Herstellung der Verankerungselemente ist sehr aufwändig, da diese in der Regel aus Federstahl hergestellt und kalt verformt werden müssen.

Aus der GB 2 321 685 sind Verankerungselemente bekannt, welche im Querschnitt im wesentlichen L-förmig ausgebildet sind. Dabei erstreckt sich ein erster Schenkel etwa in Achsrichtung und ein zweiter Schenkel unter einem spitzen Winkel dazu. Die zweiten Schenkel sind mit vom freien Ende ausgehenden Schlitzen versehen. Durch diese Schlitze entstehen einzelne Zähne, welche in die Oberfläche der zu verbindenden Rohre eingreifen können. Da sich die Schlitze jedoch nur über einen Teil der Länge der zweiten Schenkel erstrecken, ist die Flexibilität der Zähne relativ gering.

Insbesondere bei Ovalität der Rohre oder versehentlich schief montierter Rohrkupplung können die Zähne nicht optimal am Rohr eingreifen. Verankerungselemente nach dem Oberbegriff des Anspruchs 1 sind bekannt aus den Patentanmeldungen DE 26 37 044 A1, FR-A-2 822521 und DE 103 02 598 A1 sowie dem Patent US-A-5 160 179.
Der Erfindung liegt die Aufgabe zugrunde, Verankerungselemente für Rohrkupplungen zu schaffen, die eine hohe Flexibilität und eine sichere verankerung am Rohr ermöglichen.

Gemäss der Erfindung wird dies dadurch erreicht, dass sich die Schlitze über die gesamte Breite des Verankerungselementes erstrecken und. wenigstens einen im wesentlichen quer zum Schlitz verlaufenden Steg aufweisen Durch die sich Ober den Übergang bzw. über den Radius hinaus erstreckenden Schlitze entstehen eine Vielzahl von einzelnen Zähnen, welche praktisch unabhängig voneinander verformbar sind. Das gesamte Verankerungselement wird somit sehr flexibel und kann auf einfache Weise hergestellt und montiert werden. Ausserdem kann dadurch die Flexibilität, bzw. Auslenkung der einzelnen Zähne begrenzt werden.

Die Stege sind vorteilhaft elastisch oder plastisch verformbar und können bspw. gestaucht oder gestreckt werden. Durch das Verformen der Stege ist auch das gesamte Verankerungselement radial verformbar.

Damit die Schenkel in sich formstabil sind, ist es zweckmässig, dass diese im Querschnitt wenigstens über einen Teil ihrer Länge Profilierungen aufweisen. Solche Profilierungen können als Rippen oder durchgehend geprägte Sicken ausgebildet werden.

Die ersten Schenkel sind vorteilhaft in ihrer Achsrichtung wenigstens teilweise gegen die Rohrachse hin gewölbt ausgebildet. Durch diese Wölbung wird das freie Ende der ersten Schenkel radial gegen aussen gerichtet Dabei können diese Enden mit der Innenseite des Gehäuses in Kontakt treten, bzw. mit diesem zum kraftschlüssigen Eingriff kommen. Dadurch können bspw. unerwünschte Relativverdrehungen zwischen dem Verankerungselement und dem Gehäuse vermieden werden.

Eine Verbesserung des Kontakts zwischen dem Verankerungselement und dem Gehäuse wird vorteilhaft dadurch erreicht, dass die freien Enden des ersten Schenkel mit radial nach aussen ragenden Noppen oder Krallen versehen sind. Solche Noppen oder Krallen ergeben punktförmige Auflagen und somit relativ hohe Flächenpressungen. Dies wiederum führt zu einem guten Reib-, bzw. Kraftschluss.

Bekannte Rohrkupplungen weisen meist zwei in der Regel symmetrisch zueinander angeordnete Verankerungselemente auf. Dabei erfolgt die Kraftübertragung über das Gehäuse. Eine zweckmässige Lösung besteht darin, dass zwei in axialem Abstand angeordnete, gegeneinander gerichtete, im Querschnitt L-förmig ausgebildete Elemente über die sich in Achsrichtung erstreckenden, ersten Schenkel einstückig miteinander verbunden sind. Dabei wird die Axialkraft nicht mehr über das Gehäuse, sondern direkt im Verankerungselement selbst übertragen.

Für die Flexibilität bei der Herstellung und der Montage des Verankerungselementes erstrecken sich die Schlitze vorteilhaft über die gesamte Breite des Verankerungselementes. Der Zuschnitt des Verankerungselementes kann somit kontinuierlich als Meterware produziert und bei Bedarf auf die dem Umfang der jeweiligen Rohrkupplung entsprechende Länge abgetrennt werden.

Für die Stabilität des Verankerungselementes sind pro Schlitz zweckmässigerweise wenigstens zwei über die Länge der Schlitze verteilt angeordnete Stege vorgesehen. Durch zwei Stege ist die Breite der Schlitze definiert und die Stabilität des Verankerungselementes gewährleistet.

Vorteilhaft sind an jedem Schlitz 3 gleichmässig über die Länge verteilt angeordnete Stege vorgesehen. Somit befindet sich ein Steg in der Mitte und die beiden anderen Stege können je nach Bedarf weiter aussen oder innen an den Schlitzen angeordnet werden.

Das Verankerungselement ist zweckmässigerweise im wesentlichen als geschlitzte Hülse ausgebildet, wobei das eine Ende im Bereich des Längsschlitzes mit einer das andere Ende über- oder untergreifenden Zunge versehen ist.

Die Zunge ermöglicht eine Anpassung der Rohrkupplung an unterschiedliche Rohr-Aussendurchmesser und verhindert, dass ein offener Schlitz entsteht, durch den das Dichtelement nach aussen gepresst werden kann.

Die Zunge ist vorteilhaft in Umfangsrichtung gesehen gewölbt ausgebildet ist. Dadurch kann die Zunge gut über oder unter das gegenüberliegende Ende des Längsschlitzes gleiten.

Die Herstellung des erfindungsgemässen Verankerungselementes erfolgt zweckmässig dadurch, dass zunächst die Kontur ausgeschnitten, bzw. gestanzt wird, dann eine allfällige Profilierung angebracht und die zweiten Schenkel umgebogen werden und anschliessend gerundet wird.

Die Erfindung soll nachstehend, anhand der sie beispielsweise wiedergebenden Zeichnungen, näher erläutert werden. Es zeigen:
- Fig. 1: eine Rohrkupplung mit zwei nicht erfindungsgemässen Verankerungselementen, im Längsschnitt dargestellt;
- Fig. 2: ein Verankerungselement der aus Fig. 1 ersichtlichen Rohrkupplung, in perspektivischer Darstellung;
- Fig.3: einen Längsschnitt durch eine Variante des in Fig. 1 und 2 dargestellten Verankerungselement;
- Fig. 4: eine weitere Variante eines Verankerungselementes, im Längsschnitt;
- Fig. 5: eine Rohrkupplung einem erfindungsgemässen Verankerungselement, im Längsschnitt dargestellt;
- Fig. 6: ein Verankerungselement gemäss Fig. 5, in perspektivischere Darstellung.

Die Bezugszeichenliste ist Bestandteil der Offenbarung.

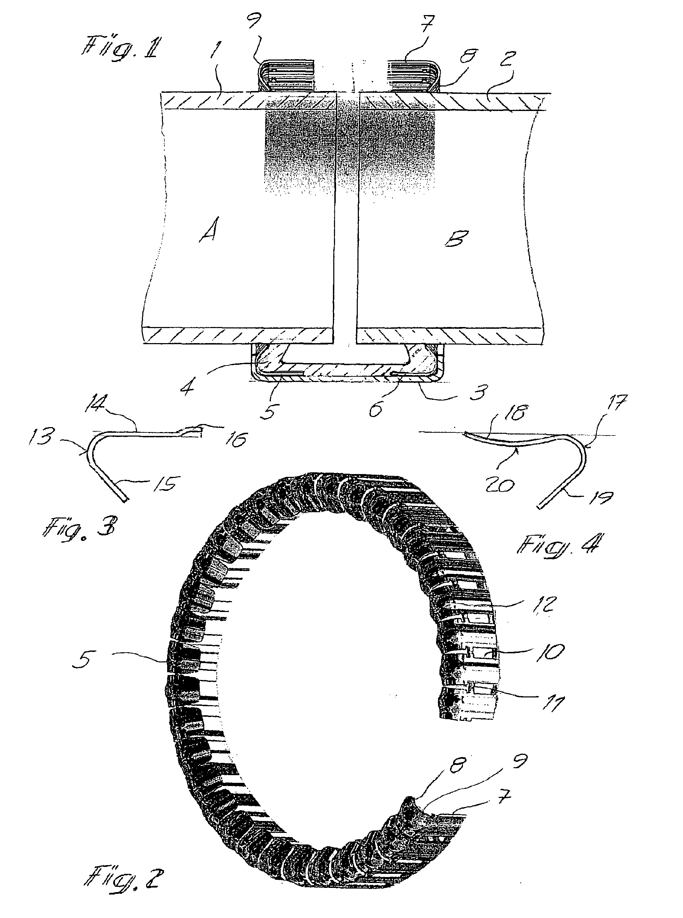

Die aus Fig. 1 ersichtliche Rohrkupplung dient zum Verbinden von zwei glattendigen Rohren 1 und 2. Dabei wird die Rohrkupplung über die Stoßstelle zwischen den beiden Rohren 1, 2 montiert. Die Rohrkupplung besteht aus einem im Längsschnitt C-förmigen Gehäuse 3 und einem darin angeordneten, ebenfalls etwa C-förmigen Dichtelement 4. Das Dichtelement 4 besteht aus einem gummielastischen Werkstoff, der gegenüber dem Leitungsmedium beständig sein muss. Zwischen dem Dichtelement 4 und dem Gehäuse 3 sind zwei nicht erfinderungsgemäße Verankerungselemente 5, 6 angeordnet. Die Verankerungselemente 5, 6 weisen im Längsschnitt einen sich in Achsrichtung erstreckenden ersten Schenkel 7 und einen zweiten sich unter einem spitzen Winkel zum ersten Schenkel 7 erstreckenden Schenkel 8 auf. Der Übergang zwischen den Schenkeln 7, 8 ist als Radius 9 ausgebildet.

Die Verankerungselemente 5, 6 dienen der Übertragung der Axialkräfte und stützen sich in axialer Richtung an den seitlichen Flanken des Gehäuses 3 ab. Wie insbesondere aus Fig. 2 ersichtlich ist, sind die Verankerungselemente 5, 6 mit in Längsrichtung verlaufenden schlitzen 10 versehen. Diese Schlitze 10 erstrecken sich vom zweiten Schenkel 8 aus über den Radius 9 hinaus bis in den ersten Schenkel 7 und ergeben eine hohe Flexibilität der Verankerungselemente 5, 6. Die Verankerungselemente 5, 6 bestehen somit aus einer Vielzahl von miteinander verbundenen Zahnsegmenten. Um eine gewisse Formstabilität der Verankerungselemente 5, 6 zu erhalten sind im Bereich der Schlitze 10 verformbare Stege 11. Diese Stege 11 können je nach Bedarf gestaucht oder gedehnt werden und ermöglichen eine Anpassung des Durchmessers an die zu verbindenden Rohre 1, 2.

Aus Fig. 3 ist eine Variante eines nicht erfinderungsgemäßen Verankerungselementes 13 ersichtlich, das einen ersten Schenkel 14 und einem zweiten Schenkel 15 aufweist. Das freie ende des ersten Schenkels 14 ist dabei mit Noppen 16 versehen. Anstelle von Noppen 16 können auch scharfe Krallen vorgesehen werden. Diese Noppen 16, bzw. Krallen bilden eine punktförmige Auflage, bzw. einen Eingriff an der Innenseite des Gehäuses 3 und verhindern somit weitgehend eine ungewollte Relativverdrehung zwischen diesen beiden Teilen.

Das in Fig. 4 dargestellte nicht erfinderungsgemäße Verankerungselement 17 weist im Längsschnitt einen ersten Schenkel 18 und einen damit verbundenen zweiten Schenkel 19 auf. Der erste Schenkel 17 ist gegen die Rohrachse hin miteiner Wölbung 29 versehen. Diese Wölbung 20 hat einen ähnlichen Effekt wie die Noppen 20 bei der aus Fig. 3 ersichtlichen Ausführung. Beim Verspannen der Rohrkupplung wir der zweite Schenkel 19 im Uhrzeigersinn bewegt. Durch die punktförmige Auflage im Bereich des Überganges zwischen den beiden Schenkeln 18, 19 wir dabei auch das freie ende des ersten Schenkels 18 nach aussen gegen die Wandung des Gehäuses gedrückt.

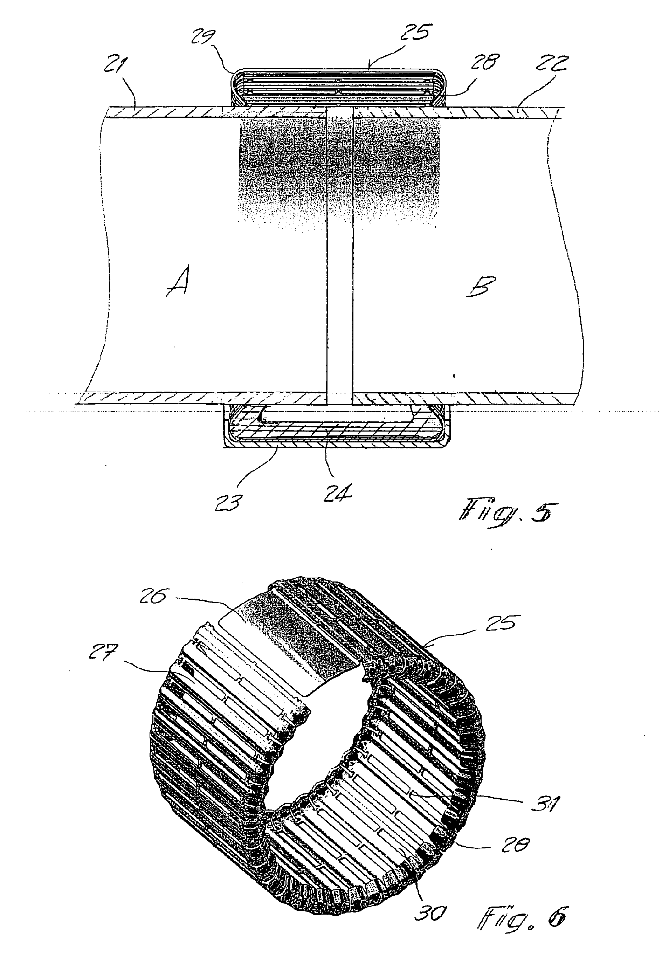

Die aus Fig. 5 ersichtliche Ausführung einer Rohrkupplung zum Verbinden von zwei Rohren 21 und 22 weist ebenfalls ein Gehäuse 23 und ein darin angeordnetes Dichtelement 24 auf. Im Unterschied zu den in den Fig. 1 bis 4 dargestellten Ausführungen ist jedoch nur ein einziges Verankerungselement 25 vorgesehen. Im Prinzip entsteht diese Ausführung dadurch, dass zwei Verankerungselemente gemäss den Fig. 1 bis 4 einstückig miteinander verbunden sind. Dies ergibt den Vorteil, dass die Kraftübertragung innerhalb des Verankerungselementes selbst erfolgt und das Gehäuse somit entlastet wird. Dies ermöglicht den Einsatz von Gehäusen mit geringerer Wandstärke und somit eine erhebliche Matereinsparung.

Fig. 6 zeigt deutlich die hülsenförmige, längsgeschlitzte Ausbildung des Verankerungselementes 25 mit einer Zunge 26, welche den Längsschlitz 32 überbrückt. Die Zunge 26 kann die gegenüberliegende Seite des Längsschlitzes 32 über- oder untergreifen. Durch diese Überlappung wird verhindert, dass das Dichtelement 24 im Bereich des Längsschlitzes 32 durch den Innendruck radial herausgepresst werden kann. Deutlich erkennbar ist auch, dass über den gesamten Umfang verteilt angeordnete, in axialer Richtung verlaufende Schlitze 30 sich im wesentlichen über die gesamte Breite erstrecken. Im Bereich der Schlitze 30 sind verformbare Stege 31 angeordnet, welche die Verbindung zwischen den einzelnen ersten Schenkeln 27 herstellen. Beim Verspannen der Rohrkupplung können die Stege 31 gestaucht oder gestreckt werden.

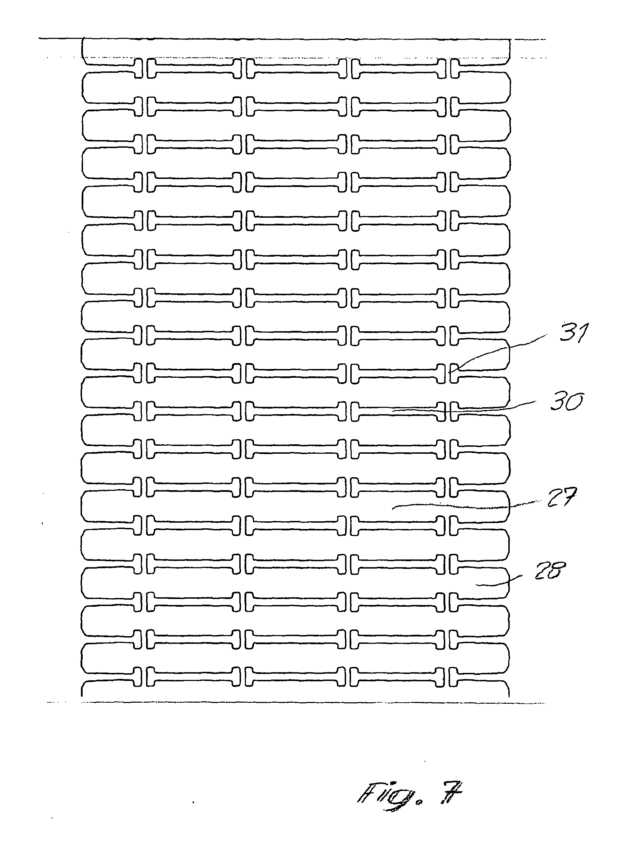

Fig. 7 zeigt den gestreckten Zuschnitt eines Verankerungselementes 25 gemäss den Fig. 5 und 6. Dieser Zuschnitt kann bspw. durch einen kontinuierlichen Stanzvorgang erfolgen. Durch die zwischen den Schenkeln 27, 28 verlaufenden Schlitze 30 ist das entstehende Band sehr flexibel in kann unter Verformung der Stege 31 einfach als Meterware aufgewickelt werden. Zur Konfektionierung der Verankerungselemente wird dann die dem Umfang entsprechende Länge vom Band abgetrennt.

### Bezugszeichenliste

- 1, 2: Rohr
- 3: Gehäuse
- 4: Dichtelement
- 5: Verankerungselement (L-förmig)
- 6: Verankerungselement (L-förmig)
- 7: erster Schenkel
- 8: zweiter Schenkel
- 9: Radius
- 10: Schlitz
- 11: Steg
- 12: Profilierung
- 13: Verankerungselement (L-förmig)
- 14: erster Schenkel
- 15: zweiter Schenkel
- 16: Noppen
- 17: Verankerungselement (L-förmig)
- 18: erster Schenkel
- 19: zweiter Schenkel
- 20: Wölbung
- 21, 22: Rohr
- 23: Gehäuse
- 24: Dichtelement
- 25: Verankerungselement (C-förmig)
- 26: Zunge
- 27: erster Schenkel
- 28: zweiter Schenkel
- 29: Radius
- 30: Schlitz
- 31: Steg
- 32: Längsschlitz

## Patentansprüche

1. Verankerungselement für Rohrkupplungen zum kraftschlüssigen Verbinden glattendiger Rohre, mit einem Gehäuse, wenigstens einem darin angeordneten Dichtelement (24) aus gummielastischem Werkstoff, wobei das Verankerungselement im Einsatz zum Eingriff mit wenigstens einem der zu verbindenden Rohre (21, 22) dient, im Querschnitt im wesentlichen L-förmig ausgebildet ist und einen sich in Achsrichtung erstreckenden ersten Schenkel (27) sowie einen zweiten, sich unter einem spitzen Winkel zum ersten Schenkel erstreckenden Schenkel (28) aufweist und der Übergang zwischen den beiden Schenkeln vorzugsweise als Radius (29) ausgebildet ist, wobei der zweite Schenkel (28) wenigstens teilweise mit in Längsrichtung verlaufenden Schlitzen (30) versehen ist und sich die Schlitze (30) über den Übergang bzw. über den Radius (29) hinaus bis in den ersten Schenkel erstrecken, wobei die Schlitze wenigstens einen im wesentlichen quer zum Schlitz verlaufenden, elastisch oder plastisch verformbaren Steg (31) aufweisen wobei zwei in axialem Abstand angeordnete, gegeneinander gerichtete, im Querschnitt L-förmig ausgebildete Verankerungslehmente (25) über die sich in Achsrichtung erstreckenden, ersten Schenkel (27) einstückig miteinander verbunden sind und/oder die L-förmig ausgebildeten Verankerungselemente (25) im Querschnitt insgesamt im wesentlichen C-förmig ausgebildet sind, **dadurch gekennzeichnet, dass** sich die Schlitze (30) über die gesamte Breite des Verankerungselementes (25) erstrecken und dass pro Schlitz (30) wenigstens zwei über die Länge der Schlitze (30) verteilt angeordnete Stege (31) vorgesehen sind.

2. Verankerungselement nach Anspruch 1, **dadurch gekennzeichnet, dass** die Schenkel (27,28) im Querschnitt wenigstens über einen Teil ihrer Länge Profilierungen (12) aufweisen.

3. Verankerungselement nach Anspruch 1 oder 2, **dadurch gekennzeichnet, dass** die ersten Schenkel (27) in ihrer Achsrichtung wenigstens teilweise gegen die Rohrachse hin gewölbt ausgebildet sind.

4. Verankerungselement nach einem der vorhergehenden Ansprüche, **dadurch gekennzeichnet, dass** die freien Enden des ersten Schenkels (14) mit radial nach aussen ragenden Noppen (16) oder Krallen versehen sind.

5. Verankerungselement nach Anspruch 1, **dadurch** gekenntzeichnet dass sich die Schlitze (30) über die gesamte Breite des Verankerungselementes (25) erstrecken.

6. Verankerungselement nach Anspruch 1, **dadurch gekennzeichnet, dass** an Jedem Schlitz (30) drei gleichmässig über die Länge verteilt angeordnete Stege (31) vorgesehen sind.

7. Verankerungselement nach einem der Ansprüche 1, 5 oder 6, **dadurch gekennzeichnet, dass** es im wesentlichen als geschlitzte Hülse ausge-bildet ist, wobei das eine Ende im Bereich des Längsschlitzes (32) mit einer das andere Ende über- oder untergreifenden Zunge (26) versehen ist

8. Verankerungselement nach Anspruch 7, **dadurch gekennzeichnet, dass** die Zunge (26), in Umfangsrichtung gesehen, gewölbt ausgebildet ist

9. Verfahren zur Herstellung eines Verankerungselementes nach einem der vorhergehenden Ansprüche, mit einer Kontur und einer allfälligen Profilierung, **dadurch** gekenntzeichnet dass zunächst die Kontur ausgeschnitten, bzw. gestanzt wird, dann die allfällige Profilierung angebracht, die zweiten Schenkel umgebogen werden und anschliessend das Verankerungselement gerundet wird.

## Claims

1. Anchoring element for pipe couplings for the non-positively locking connection of smooth-ended pipes, having a housing and having at least one sealing element (24) which is arranged therein and which is composed of rubber-elastic material, with the anchoring element serving, in use, for engagement with at least one of the pipes (21, 22) to be connected, being substantially L-shaped in cross section, and having a first limb (27), which extends in the axial direction, and a second limb (28), which extends at an acute angle with respect to the first limb, and with the transition between the two limbs being designed preferably as a radius (29), with the second limb (28) being provided at least partially with slots (30) which run in the longitudinal direction, and with the slots (30) extending over the transition or over the radius (29) into the first limb, with the slots having at least one elastically or plastically deformable web (31) which runs substantially transversely with respect to the slot, with two anchoring elements (25) which are arranged with an axial spacing to one another and which are aligned counter to one another and which are of L-shaped cross section being connected to one another by means of the first limb (27) which extends in the axial direction, and/or with the L-shaped anchoring elements (25) being substantially C-shaped overall in cross section, **characterized in that** the slots (30) extend over the entire width of the anchoring element (25) and **in that**, per slot (30), at least two webs (31) are provided which are arranged so as to be distributed over the length of the slots (30).

2. Anchoring element according to Claim 1, **characterized in that** the limbs (27, 28) have profilings (12) in cross section at least over a part of their length.

3. Anchoring element according to Claim 1 or 2, **characterized in that** the first limbs (27) are designed, in their axial direction, so as to be at least partially arched in the direction of the pipe axis.

4. Anchoring element according to one of the preceding claims, **characterized in that** the free ends of the first limb (14) are provided with radially outwardly projecting knobs (16) or claws.

5. Anchoring element according to Claim 1, **characterized in that** the slots (30) extend over the entire width of the anchoring element (25).

6. Anchoring element according to Claim 1, **characterized in that**, on each slot (30), three webs (31) are provided which are arranged so as to be distributed uniformly over the length.

7. Anchoring element according to one of Claims 1, 5 or 6, **characterized in that** said anchoring element is designed substantially as a slotted sleeve, with the one end being provided, in the region of the longitudinal slot (32), with a tongue (26) which engages over or under the other end.

8. Anchoring element according to Claim 7, **characterized in that** the tongue (26) is of arched design as viewed in the circumferential direction.

9. Method for producing an anchoring element according to one of the preceding claims, having a contour and having an arbitrary profiling, **characterized in that** firstly the contour is cut out or punched out, then the arbitrary profiling is formed, the two limbs are bent and the anchoring element is subsequently rounded.

## Revendications

1. Elément d'ancrage destiné à des couplages de tubes pour la jonction par complémentarité de force de tubes à extrémités lisses, avec un boîtier, au moins un élément d'étanchéité (24) en matériau de caoutchouc élastique disposé dans celui-ci, dans lequel l'élément d'ancrage est utilisé pour s'engager sur au moins un des tubes à joindre (21, 22), présente une section transversale essentiellement en forme de L et présente une première branche (27) s'étendant en direction axiale ainsi qu'une seconde branche (28) s'étendant sous un angle aigu par rapport à la première branche, et la transition entre les deux branches est de préférence réalisée par une courbe (29), dans lequel la seconde branche (28) est pourvue au moins partiellement de fentes (30) s'étendant en direction longitudinale et les fentes (30) s'étendent au-delà de la transition ou au-delà de la courbe (29) jusque dans la première branche, dans lequel les fentes présentent au moins une nervure (31) déformable élastiquement ou plastiquement et s'étendant essentiellement transversalement à la fente, dans lequel deux éléments d'ancrage (25) ayant une section transversale en forme de L, orientés l'un vers l'autre et disposés à distance axiale sont assemblés l'un à l'autre en une seule pièce au moyen des premières branches (27) s'étendant en direction axiale et/ou les éléments d'ancrage (25) réalisés en forme de L sont réalisés avec une section transversale totale essentiellement en forme de C, **caractérisé en ce que** les fentes (30) s'étendent sur toute la largeur de l'élément d'ancrage (25) et **en ce qu'**il est prévu par fente (30) au moins deux nervures (31) réparties sur la longueur des fentes (30).

2. Elément d'ancrage selon la revendication 1, **caractérisé en ce que** les branches (27, 28) présentent, en section transversale, des profilages (12) au moins sur une partie de leur longueur.

3. Elément d'ancrage selon la revendication 1 ou 2, **caractérisé en ce que** les premières branches (27) sont au moins en partie cintrées en direction de l'axe du tube dans leur direction axiale.

4. Elément d'ancrage selon l'une quelconque des revendications précédentes, **caractérisé en ce que** les extrémités libres de la première branche (14) sont pourvues de bosses (16) ou de griffes orientées radialement vers l'extérieur.

5. Elément d'ancrage selon la revendication 1, **caractérisé en ce que** les fentes (30) s'étendent sur toute la largeur de l'élément d'ancrage (25).

6. Elément d'ancrage selon la revendication 1, **caractérisé en ce qu'**il est prévu à chaque fente (30) trois nervures (31) disposées en répartition uniforme sur la longueur.

7. Elément d'ancrage selon l'une quelconque des revendications 1, 5 ou 6, **caractérisé en ce qu'**il est réalisé en forme de douille fendue, dans lequel une première extrémité est pourvue, dans la région de la fente longitudinale (32), d'une patte (26) s'accrochant au-dessus ou en dessous de l'autre extrémité.

8. Elément d'ancrage selon la revendication 7, **caractérisé en ce que** la patte (26) est courbe, vue en direction périphérique.

9. Procédé de fabrication d'un élément d'ancrage selon l'une quelconque des revendications précédentes, avec un contour et un profilage éventuel, **caractérisé en ce que** l'on découpe ou on emboutit d'abord le contour, on applique ensuite le profilage éventuel, on courbe les secondes branches et ensuite on arrondit l'élément d'ancrage.
